# EUROPÄISCHE PATENTSCHRIFT

(11) **EP 3 389 906 B1**
(45) Veröffentlichungstag und Bekanntmachung des Hinweises auf die Patenterteilung: **04.05.2022**
(21) Anmeldenummer: 16822132.3
(22) Anmeldetag: 14.12.2016
(51) Int. Cl.: B23F 5/16, B23F 17/00, B23F 19/10

(54) **VORRICHTUNG UND VERFAHREN ZUR FERTIGUNG EINER FASE AN EINEM VERZAHNTEN WERKRAD**
DEVICE AND METHOD FOR PRODUCING A CHAMFER ON A TOOTHED WORKPIECE WHEEL
DISPOSITIF ET PROCÉDÉ DE CHANFREINAGE D'UNE ROUE D'USINAGE DENTÉE

(30) Priorität: 15.12.2015 DE 102015121821
(43) Veröffentlichungstag der Anmeldung: 24.10.2018
(73) Patentinhaber: Profilator GmbH & Co. KG, 42329 Wuppertal (DE)
(72) Erfinder: SOBCZYK, Marcel, 42653 Solingen (DE)
(74) Vertreter: Grundmann, Dirk
(86) Internationale Anmeldenummer: PCT/EP2016/080963
(87) Internationale Veröffentlichungsnummer: WO 2017/102824

(56) Entgegenhaltungen:
- EP-A1- 2 954 967
- WO-A1-2007/045610
- WO-A1-2015/185186
- WO-A2-2010/079113
- DE-A1- 10 230 148
- GB-A- 868 016
- GB-A- 1 349 127
- US-A- 2 206 443
- US-A- 2 758 512
- "Abdachen und Verzahnen in einer Aufspannung Herstellung von Zahnrädern und verzahnten Bauteilen", WERKSTATT + BETRIEB, CARL HANSER VERLAG, MÜNCHEN DE, Bd. 146, Nr. 11, 1. November 2013 (2013-11-01), Seiten 56-57, XP001587012, ISSN: 0043-2792

## Beschreibung

### Gebiet der Technik

Die Erfindung betrifft ein Verfahren zur Fertigung eines verzahnten Werkrades, dessen Zahngrund unter Ausbildung einer sich bis in die Zahnflanken erstreckenden Fase an eine Stirnfläche des Werkrades angrenzt, gemäß dem Oberbegriff des unabhängigen Anspruchs 1, wobei die Verzahnung des Werkrades durch Wälzschälen mit einem Verzahnungswerkzeug erzeugt wird, das eine erste Anzahl von jeweils Schneidkanten ausbildenden Schneidzähnen aufweist, dessen Drehachse in einem ersten Achskreuzwinkel zur Drehachse des Werkrades steht, mit einem Vorschub in einer ersten Vorschubrichtung parallel zur Erstreckungsrichtung der zu fertigenden Zahnflanken und des Zahngrundes.

Die Erfindung betrifft darüber hinaus einen Werkzeugsatz zur Durchführung des Verfahrens bestehend aus einem Verzahnungswerkzeug und einem Fasenwerkzeug.

Die Erfindung betrifft ferner eine Vorrichtung gemäß dem Oberbegriff des unabhängigen Anspruchs 3 zur Durchführung des Verfahrens mit einer Werkstückspindel und mindestens einer Werkzeugspindel sowie einer elektronischen Steuerung zur Ansteuerung von Drehantriebsaggregaten und Verstellaggregaten zur Erzeugung einer Drehbewegung der jeweiligen Spindel eines Vorschubs sowie zur Änderung eines Achskreuzwinkels zwischen den Spindelachsen.

### Stand der Technik

Aus der WO 2007/045610 A1 sind ein derartiges Verfahren zum Verzahnen von Zahnrädern und eine derartige Vorrichtung zur Durchführung dieses Verfahrens vorbekannt, bei dem als Verzahnungswerkzeug ein Schälrad verwendet wird. Das Schälrad besitzt Schneidkanten, die von den Kanten ausgebildet sind, an denen die Zahnflanken an die Stirnfläche angrenzen.

Die GB 1 349 127 A offenbart ein Verfahren zum Entgraten beziehungsweise abschrägen der Zahnkanten eines Zahnrades, wobei ein zahnradförmiges Schneidwerkzeug verwendet wird, das um eine Achse drehangetrieben wird, die in einem Achskreuzwinkel zur Werkstückachse steht. Die Schneidzähne des Werkzeuges greifen in einer Scherbewegung an dem zu entratenden beziehungsweise abzuschrägenden Zähnen des Werkrades an.

### Zusammenfassung der Erfindung

Der Erfindung liegt die Aufgabe zugrunde, ein Verfahren, eine Vorrichtung und einen Werkzeugsatz anzugeben, mit dem eine Verzahnung mit einer Fase im Bereich zwischen Zahngrund und Stirnfläche des Werkrades gefertigt werden kann.

Gelöst wird die Aufgabe durch die in den unabhängigen Ansprüchen 1, 2 und 3 angegebene Erfindung, wobei die Unteransprüche vorteilhafte Weiterbildungen der nebengeordneten Ansprüche darstellen.

Zunächst und im Wesentlichen ist vorgesehen, dass die Verzahnung des Werkrades durch Wälzschälen mit einem Verzahnungswerkzeug erzeugt wird. Bei dem Verzahnungswerkzeug handelt es sich um ein Schälrad in der Form eines Zahnrades, dessen Zähne eine erste Anzahl von Schneidzähnen ausbilden. Die Schneidzähne bilden jeweils Schneidkanten aus. Die Schneidkanten können im Übergangsbereich der Zahnflanken des Schneidrades zu einer Stirnfläche des Schneidzahnes liegen. Die Stirnflächen der Schneidzähne können in einer gemeinsamen Ebene liegen. Sie können aber auch treppenartig versetzt zueinander angeordnet sein. Die Schneidzähne verlaufen bevorzugt in einem Schrägungswinkel zur Drehachse des Verzahnungswerkzeuges. Beim Wälzschälen zur Fertigung der Verzahnung steht die Drehachse des Verzahnungswerkzeuges in einem ersten Achskreuzwinkel zur Drehachse des Werkrades, welches mit einer Anzahl von Zähnen versehen werden soll, wozu zwischen den Zähnen Zahnlücken geschält werden. Hierzu werden das Werkrad und das Verzahnungswerkzeug synchron zueinander angetrieben. Hierzu besitzt die Vorrichtung eine Werkzeugspindel zur Aufnahme des Werkzeuges und eine Werkstückspindel zur Aufnahme des Werkrades. Die beiden Spindeln werden jeweils von elektrischen Drehantriebsaggregaten drehangetrieben. Es sind zusätzliche Verstellaggregate vorgesehen, um einen Vorschub zu erzeugen und um den Achskreuzwinkel einzustellen. Bei der Verzahnung erfolgt der Vorschub in einer ersten Vorschubrichtung, die parallel zur Erstreckungsrichtung der zu fertigenden Zahnflanken und des zu fertigenden Zahngrundes verläuft. Nach der Fertigung der Verzahnung, die in mehreren aufeinander folgenden Schritten durchgeführt werden kann, wobei der Achsabstand zwischen Werkraddrehachse und Werkzeugdrehachse schrittweise geändert wird, wird die Fase gefertigt. Bei der Fertigung der Verzahnung kann einem oder einer Mehrzahl von Schruppschritten ein Schlichtschritt folgen. Die Fertigung der Fase erfolgt erfindungsgemäß ebenfalls durch Wälzschälen mit einem verzahnten Schälwerkzeug, welches ein Fasenwerkzeug ausbildet. Das Fasenwerkzeug besitzt eine zweite Anzahl von Schneidzähnen, die ebenfalls Schneidkanten ausbilden. Auch diese Schneidkanten können von den Kanten ausgebildet sein, an denen die Zahnflanken der Schneidzähne in eine Stirnfläche des Schneidzahnes übergehen. Auch diese Schneidzähne können einen Schrägungswinkel zur Drehachse des Fasenwerkzeuges aufweisen. Die Stirnflächen der Schneidzähne können in einer gemeinsamen Ebene liegen. Es kann aber auch vorgesehen sein, dass die Stirnflächen treppenförmig zueinander verlaufen. Die Drehachse des Fasenwerkzeuges steht in einem zweiten Achskreuzwinkel zur Drehachse des Werkrades. Das Werkrad und das Fasenwerkzeug werden synchron zueinander drehangetrieben. Es erfolgt eine Relativverlagerung der Werkstückspindel gegenüber der Werkzeugspindel zur Erzeugung eines Vorschubs, der in einer zweiten Vorschubrichtung gerichtet ist. Die zweite Vorschubrichtung verläuft parallel zur Erstreckungsrichtung der zu fertigenden Fase im Zahngrund. Die zweite Vorschubrichtung wird durch eine Überlagerung einer Verlagerungsrichtung in Zahnflankenerstreckungsrichtung des Werkrades und in der Drehebene des Werkrades erzeugt, wobei die Bewegungskomponenten derart aufeinander abgestimmt sind, dass sich der gewünschte Fasenwinkel im bevorzugten Bereich zwischen 15° und 45° einstellt. Zur Durchführung des Verfahrens wird ein Werkzeugsatz verwendet, der aus einem Verzahnungswerkzeug und einem Fasenwerkzeug besteht. Beide Werkzeuge werden von Schälrädern ausgebildet. Die Umrisskontur der Zähne in der Drehebene des jeweiligen Schälrades weichen voneinander ab. Während die Zähne des Verzahnungswerkzeuges symmetrisch zu einer durch die Zahnmitte gezogenen Radialen verlaufen, wird bei den Schneidzähnen des Fasenwerkzeuges eine Profilkorrektur vorgenommen, so dass die seitlichen Zahnflanken nicht symmetrisch zu einer durch die Zahnmitte gezogenen Radialen verlaufen. Eine der beiden Zahnflanken ist ausgehend vom Zahnfuß in Richtung auf den Zahnkopf des Schneidzahnes keilförmig zurückgenommen. Die gegenüberliegende Zahnflanke ist ausgehend vom Zahnkopf hin zum Zahnfuß keilförmig zurückgenommen. Es ist ferner vorgesehen, dass sich die Anzahl der Schneidzähne beim Verzahnungswerkzeug und beim Fasenwerkzeug unterscheiden. Bevorzugt ist die Anzahl der Schneidzähne des Verzahnungswerkzeuges größer als die Anzahl der Schneidzähne des Fasenwerkzeuges. Es ist insbesondere vorgesehen, dass der Quotient der Anzahl der Schneidzähne des Verzahnungswerkzeuges zur Anzahl der Zähne des Werkrades ≥ ½ ist und der Quotient der Anzahl der Schneidzähne des Fasenwerkzeugs zur Anzahl der Zähne des Werkrades ≤ ½ bevorzugt ≤ ⅓ ist. Das Verzahnungswerkzeug ist so ausgelegt, dass der Achskreuzwinkel zwischen Drehachse des Verzahnungswerkzeuges, also Drehachse der Werkzeugspindel, und Drehachse des Werkrades, also Drehachse der Werkstückspindel, bei etwa 20° (20° ± 5°), bevorzugt in einem Bereich zwischen 15° und 30°, liegt. Das Fasenwerkzeug ist so ausgelegt, dass der Achskreuzwinkel zwischen Drehachse des Fasenwerkzeuges und Drehachse des Werkrades beim Erzeugen der Fase geringer ist. Der Achskreuzwinkel kann hier im Bereich von 10° (10° ± 5°), bevorzugt in einem Bereich zwischen 5° und 20°, liegen. Besonders bevorzugt ist der zweite Achskreuzwinkel um mindestens 10° geringer als der erste Achskreuzwinkel. Die zur Durchführung des Verfahrens hergerichtete Vorrichtung besitzt zumindest eine Werkstückspindel und eine Werkzeugspindel. Die Werkstückspindel trägt das Werkrad. Die Werkzeugspindel trägt das Verzahnungswerkzeug bzw. das Fasenwerkzeug. Es ist insbesondere vorgesehen, dass das Verzahnungswerkzeug und das Fasenwerkzeug ein Kombiwerkzeug ausbilden, das von einer gemeinsamen Werkzeugspindel drehangetrieben werden kann. Fasenwerkzeug und Verzahnungswerkzeug sind koaxial zueinander angeordnet und drehfest miteinander verbunden, wobei das gegenüber dem Verzahnungswerkzeug durchmessergeringere Fasenwerkzeug in Richtung auf das freie Ende der Werkzeugspindel vor dem Verzahnungswerkzeug angeordnet ist. In einer Variante kann aber auch vorgesehen sein, dass das Fasenwerkzeug und das Verzahnungswerkzeug jeweils von einer zugeordneten Werkzeugspindel drehangetrieben werden, so dass die Vorrichtung zumindest zwei Werkzeugspindeln und zumindest eine Werkstückspindel aufweist. Zur Durchführung des Verfahrens wird ein Rohling, bei dem es sich insbesondere um ein unverzahntes Werkrad handelt, in ein Futter der Werkstückspindel eingespannt. Mit einem von einer Werkzeugspindel synchron zur Werkstückspindel drehangetriebenen Verzahnungswerkzeug wird die Verzahnung erzeugt. Dies kann in mehreren aufeinander folgenden Schritten erfolgen, bei denen jeweils das in einem Achskreuzwinkel zum Werkrad drehangetriebene Verzahnungswerkzeug in Zahnerstreckungsrichtung der Zähne des Werkrades vorgeschoben wird, so dass in einer schälenden Bewegung Späne aus den zu erzeugenden Zahnlücken des Werkrades entfernt werden. Nach einer gegebenenfalls in mehreren Schritten erfolgten Schruppbearbeitung, bei welcher jeweils der Achsabstand zwischen Werkstückdrehachse und Werkzeugdrehachse geändert worden ist, erfolgt eine Feinbearbeitung bei vermindertem Vorschub und verminderter Spantiefe. Der Verzahnung schließt sich ein weiterer Bearbeitungsschritt an, bei dem die Fase erzeugt wird. Hierzu wird mit derselben oder einer anderen Werkzeugspindel ein Fasenwerkzeug drehangetrieben. Dies erfolgt mit einem veränderten Achskreuzwinkel und mit einem veränderten Drehzahlverhältnis zwischen Werkstückspindel und Werkzeugspindel. Der Vorschub erfolgt hier in einer Vorschubrichtung, die in Erstreckungsrichtung der Fase im Zahngrund der Zahnlücke des Werkrades verläuft. Aufgrund der geometrischen Verhältnisse bei aneinander Abwälzen der Zahnflanken des Werkrades an den Schneidkanten des Fasenwerkzeuges erhalten die sich an den Zahngrund anschließenden seitlichen Zahnflanken der Zähne des Werkrades voneinander verschiedene Fasenverläufe. Um die Abweichung dieser Fasenverläufe zu kompensieren, besitzen die Schneidkanten des Fasenwerkzeuges die durch die oben erwähnte Profilkorrektur gebildete Asymmetrie. Bezogen auf eine in der Stirnfläche liegende, die Drehachse schneidende und mittig durch den Schneidzahn verlaufende Radiale besitzen die beiden Schneidkanten unterschiedliche Schrägungswinkel. Legt man durch jede der beiden Zahnflanken bzw. Schneidkante eine Ausgleichsgerade, so schneiden diese beiden Ausgleichsgeraden die Radiale in voneinander verschiedenen Winkeln.

### Kurze Beschreibung der Zeichnungen

Ein Ausführungsbeispiel der Erfindung wird nachfolgend anhand beigefügter Zeichnungen erläutert. Es zeigen:
- Fig. 1: die Draufsicht in Achsrichtung der Drehachse 8 des Werkrades 7 mit in spanabhebenden Eingriff dargestellten Verzahnungswerkzeug 1, dessen Schneidzähne 3 in Zahnlücken 10 des Werkrades 7 eingreifen, wobei das Verzahnungswerkzeug 1 um eine Drehachse 2 drehangetrieben wird;
- Fig. 2: eine Seitenansicht in Richtung des Pfeiles II in Fig. 1 zur Verdeutlichung der auf einer Kegelmantelstumpfhüllfläche verlaufenden Scheitel der Schneidzähne 3 und des schälenden Eingriffs der Schneidkanten 4 in die Zahnlücken 10;
- Fig. 3: die Seitenansicht gemäß Pfeil III in Fig. 1 zur Verdeutlichung des ersten Achskreuzwinkels α₁ zwischen der Drehachse 2 des Verzahnungswerkzeuges 1 und der Drehachse 8 des Werkrades 7;
- Fig. 4: den Schnitt gemäß der Linie IV - IV in Fig. 1 zur Verdeutlichung des Angriffspunktes einer Schneidkante 4 in einer Zahnflanke 11 des Werkrades 7 und des Vorschubs V₁;
- Fig. 5: eine Darstellung gemäß Fig. 1, jedoch bei der Erzeugung einer Fase 13, wobei ein um eine Drehachse 15 drehangetriebenes Fasenwerkzeug 14 Schneidzähne 16 ausbildet, die in die Zahnlücken 10 des Werkrades 7 eingreifen;
- Fig. 6: eine Darstellung gemäß Fig. 2, jedoch beim Erzeugen der Fase;
- Fig. 7: eine Darstellung gemäß Fig. 3, jedoch beim Erzeugen der Fase zur Verdeutlichung des Achskreuzwinkels α₂ zwischen der Drehachse 15 des Fasenwerkzeuges 14 und der Drehachse 8 des Werkrades 7;
- Fig. 8: eine Darstellung gemäß Schnitt VIII - VIII in Fig. 5 zur Verdeutlichung des Vorschubs V₂ beim Erzeugen der Fase und des Angriffs einer Schneidkante 17" zur Erzeugung der Fase 13;
- Fig. 9: vergrößert den Blick auf eine Zahnlücke 10 des Werkrades 7 in Blickrichtung des Pfeiles IX in Fig. 5;
- Fig. 10: vergrößert den Ausschnitt X - X in Fig. 5;
- Fig. 11: eine perspektivische Darstellung der Fase 13;
- Fig. 12: den Ausschnitt XII - XII in Fig. 5, vergrößert einen Schneidzahn 16 des Fasenwerkzeuges 14;
- Fig. 13: den Blick gemäß Pfeil XIII in Fig. 12 auf den Zahnkopf eines Schneidzahnes 16 und
- Fig. 14: schematisch die wesentlichen Elemente einer Vorrichtung zur Durchführung des Verfahrens.

### Beschreibung der Ausführungsformen

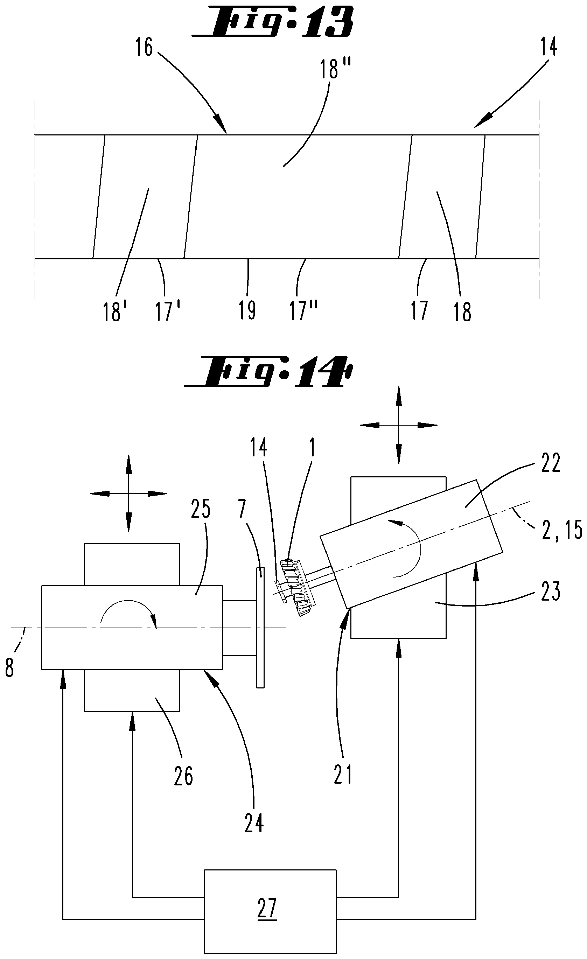

Die Figur 14 zeigt schematisch eine Werkzeugmaschine mit einem nicht dargestellten Werkzeugbett, welches Träger von Verstellaggregaten 23, 26 ist. Mit den Verstellaggregaten 26, 23 lassen sich eine Werkstückspindel 24 und eine Werkzeugspindel 21 in mehreren Raumrichtungen gegeneinander verstellen. Darüber hinaus lassen sich die Drehstellungen der Werkzeugspindel 21 und der Werkstückspindel 24 relativ zueinander einstellen.

Die Werkstückspindel 24 trägt einen zu bearbeitenden Rohling in Form eines bevorzugt unverzahnten Werkrades 7, welches eine Vielzahl No von Zähnen erhalten soll. Die Werkstückspindel 21 trägt ein Verzahnungswerkzeug 1 und in Richtung auf das freie Ende der Werkstückspindel 21 versetzt zum Verzahnungswerkzeug 1 koaxial zum Verzahnungswerkzeug 1 ein durchmessergeringeres Fasenwerkzeug 14. Mittels Drehantriebsaggregaten 22, 25 können das Werkrad 7 und die beiden Werkzeuge 1, 14 in eine Drehbewegung um die jeweiligen Drehachsen 8, 2, 15 gebracht werden.

Es ist eine elektronische Steuereinrichtung 27 vorgesehen, die programmierbar ist und mit der programmgesteuert eine Verzahnung und eine anschließende Fasenerzeugung durchgeführt werden kann. Hierzu werden das Werkrad 7 und die Werkzeuge 1, 14 in einem dem jeweiligen Zähnezahlverhältnis N₁/N₀ bzw. N₂/N₀ entsprechenden Drehzahlverhältnis synchronisiert zueinander drehangetrieben.

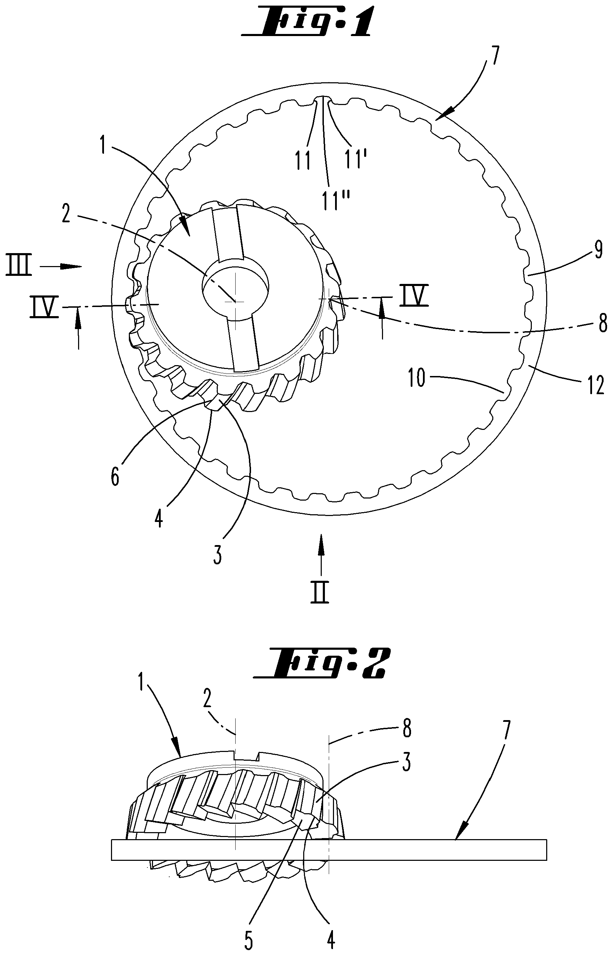

Die Figuren 1 bis 4 zeigen einen ersten Bearbeitungsschritt, bei dem mittels eines Verzahnungswerkzeuges 1 Zähne 9 mit dazwischen liegenden Zahnlücken 10 in einem Werkrad 7 erzeugt werden. Die Zahnlücken besitzen einen Zahngrund 11" und zwei seitliche Zahnflanken 11, 11'.

Das Verzahnungswerkzeug 1 besitzt eine Vielzahl N₁ von Schneidzähnen 3, die jeweils Schneidkanten 4 ausbilden. Mit den Schneidkanten 4 wird in einer wälzschälenden Bewegung die Zahnlücke 10 gefertigt, wozu sich die Schneidzähne 3 an den Zahnflanken 11, 11' bzw. dem Zahngrund 11" derart abwälzen, dass aufgrund eines Achskreuzwinkels α₁ zwischen der Drehachse 2 des Verzahnungswerkzeuges 1 und der Drehachse 8 des Werkrades 7 eine spanabhebende Bearbeitung stattfindet.

Beim Ausführungsbeispiel gehen die Zahnflanken 6 der schräg zur Drehachse 2 verlaufenden Schneidzähne 3 unter Ausbildung einer rechtwinkligen Kante in jeweils eine Stirnfläche 5 eines Schneidzahnes 3 über. Diese Übergangskanten bilden die Schneidkanten 4. Die Stirnflächen 5 sind treppenartig angeordnet.

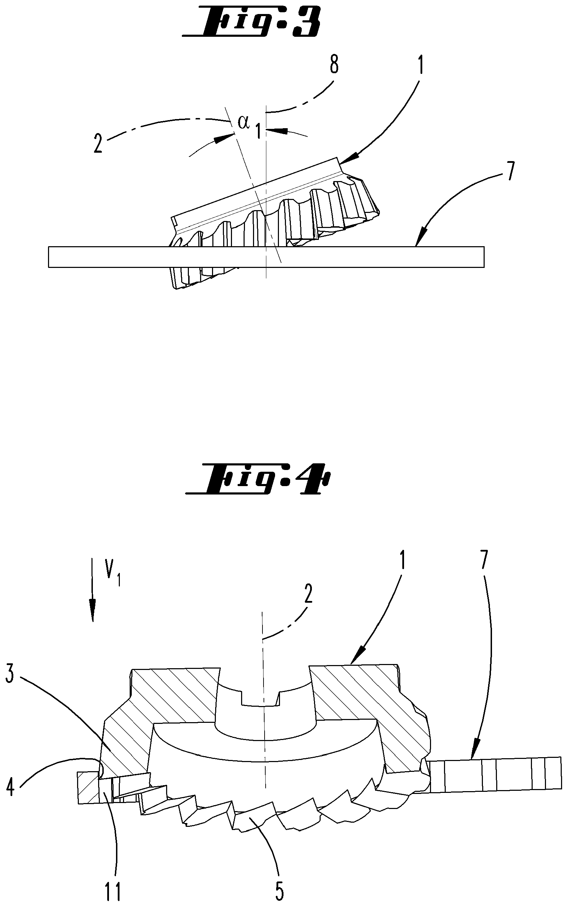

Die Figur 4 verdeutlicht die Richtung des Vorschubes V₁ bei der Verzahnung. Die Vorschubrichtung V₁ entspricht der axialen Erstreckungsrichtung der Zahnflanken 11, 11' bzw. des Zahngrundes 11" der Zahnlücken 10 des Werkrades 7.

Die Verzahnung kann in mehreren aufeinander folgenden Bearbeitungsschritten durchgeführt werden, wobei schrittweise die Zahnlücke 10 bis zur endgültigen Tiefe vertieft wird. Dabei wird der Achsabstand zwischen den Drehachsen 2, 8 schrittweise geändert. Der letzte Bearbeitungsschritt kann ein Feinbearbeitungsschritt sein.

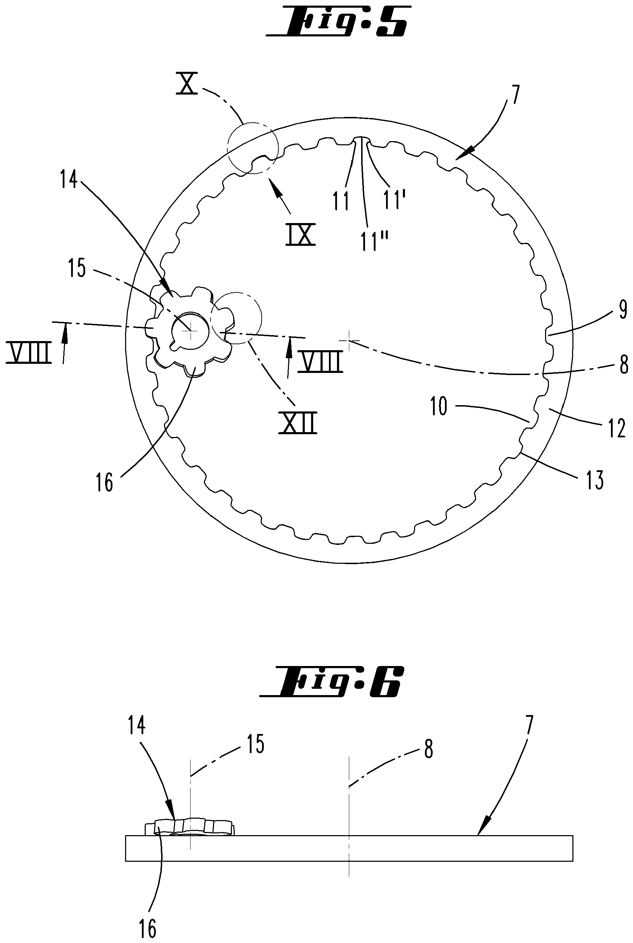

An die Wälzschälverzahnung schließt sich eine Wälzschälfasenerzeugung an, wie sie anhand der Figuren 5 bis 8 im Folgenden erläutert wird:

Das Fasenwerkzeug 14 ist ebenso wie das Verzahnungswerkzeug 1 ein mit einer Vielzahl N₂ von Schneidzähnen 16 ausgestattetes Schälwerkzeug. Beim Fasenwerkzeug 14 verlaufen die Scheitellinien der Schneidzähne 16 ebenfalls schräg zur Drehachse 15 des Fasenwerkzeuges 14, jedoch mit einem verminderten Schrägungswinkel gegenüber dem Verzahnungswerkzeug 1. Auch hier bilden die Zahnflanken 18 im Bereich ihrer Übergangskante zur Stirnfläche 19 des Schneidzahnes 16 jeweils Schneidkanten 17, 17', 17" aus, wobei die Schneidkanten 17, 17' seitliche Schneidkanten zur Erzeugung einer Fase 13 im Bereich der seitlichen Zahnflanken 11, 11' sind und die Schneidkante 17" eine kopfseitige Schneidkante ist, zur Erzeugung der Fase 13 im Bereich des Zahngrundes 11" der Zahnlücke 10 des Werkrades 7.

Beim Fasenwerkzeug 14 liegen die Stirnflächen 19 der Schneidzähne 16 in einer gemeinsamen Stirnflächenebene, die in der Drehebene des Fasenwerkzeuges 14 liegt.

Während das unter Bezugnahme auf die Figuren 1 bis 4 beschriebene Verzahnen bei einem ersten Achskreuzwinkel α₁ von etwa 20° durchgeführt wird, wird das in den Figuren 5 bis 8 dargestellte Erzeugen der Fase 13 bei einem zweiten Achskreuzwinkel α₂ zwischen der Drehachse 15 des Fasenwerkzeuges 14 und der Drehachse 8 des Werkrades 7 durchgeführt, welcher bei etwa 10° liegt.

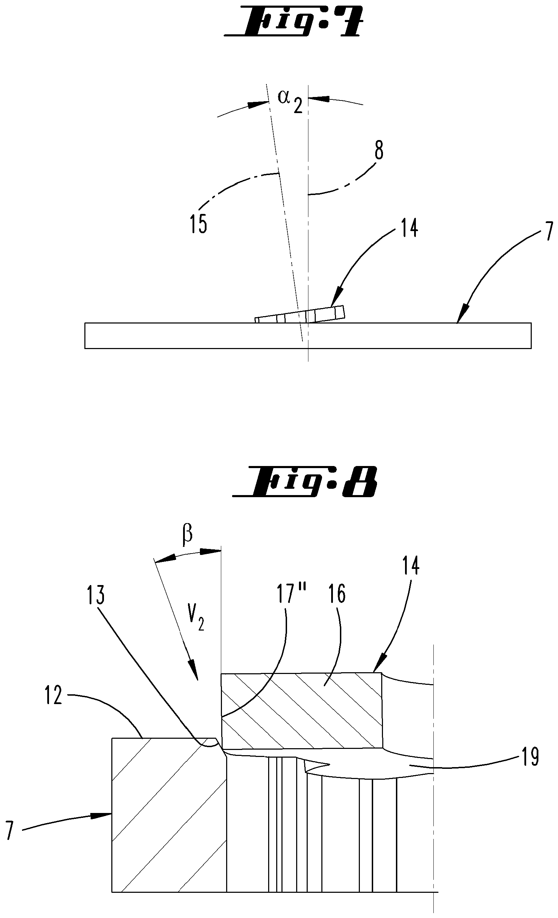

Die Figur 8 zeigt mit dem Pfeil V₂ die Vorschubrichtung, in welcher sich das Fasenwerkzeug 14 beim Erzeugen der Fase 13 gegenüber dem Werkrad 7 verlagert. Die Vorschubrichtung V₂ verläuft in etwa in einem 30°-Winkel β zur Stirnfläche 12 des Werkrades 7. Der Vorschub V₁ gemäß Pfeil in Figur 4 beim Verzahnen verläuft hingegen senkrecht zur Stirnfläche 12 des Werkrades 7.

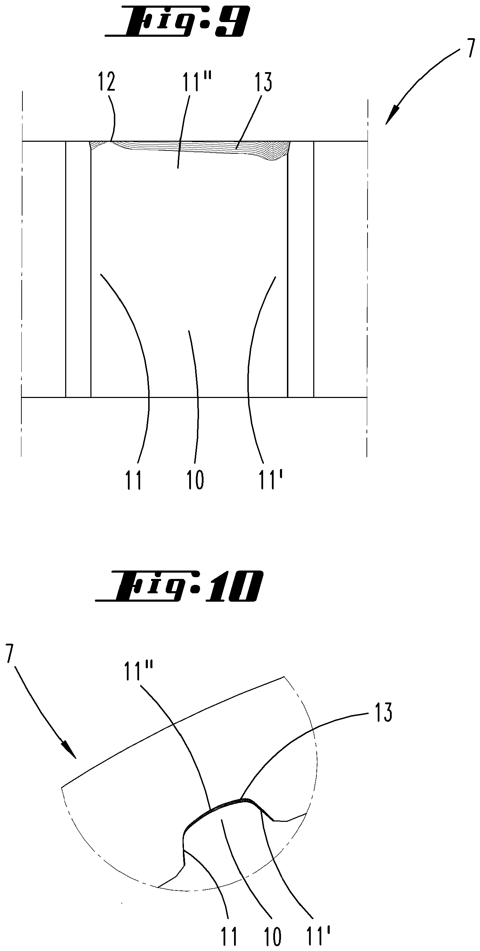

Die Fase 13 soll im Bereich der Übergangskante der Stirnfläche 12 zum Zahngrund 11" der Zahnlücke 10 des Werkrades 7 erzeugt werden. Die erzeugte Fase 13 soll sich darüber hinaus bis in die Übergangskanten der Stirnfläche in die seitlichen Zahnflanken 11, 11' der Zahnlücke 10 bzw. eines zwischen zwei Zahnlücken 10 angeordneten Zahnes 9 des Werkrades 7 erstrecken. Während der dem Zahngrund 11' zugeordnete Abschnitt der Fase 13 von einem kopfseitigen Abschnitt 17" der Schneidkante des Schneidzahnes 16 erzeugt wird, werden die beiden seitlichen Zahnflanken 11, 11' von seitlichen Schneidkanten 17, 17' des Schneidzahnes 16 erzeugt. Aufgrund des Winkels zwischen den seitlichen Zahnflanken 11, 11' zum Zahngrund 11" weicht der Konturverlauf des den seitlichen Zahnflanken 11, 11' zugeordneten Abschnitts der Fase 13 vom Konturverlauf des dem Zahngrund 11" zugeordneten Abschnitts der Fase 13 ab, wie dies die Figuren 9 bis 11 zeigen.

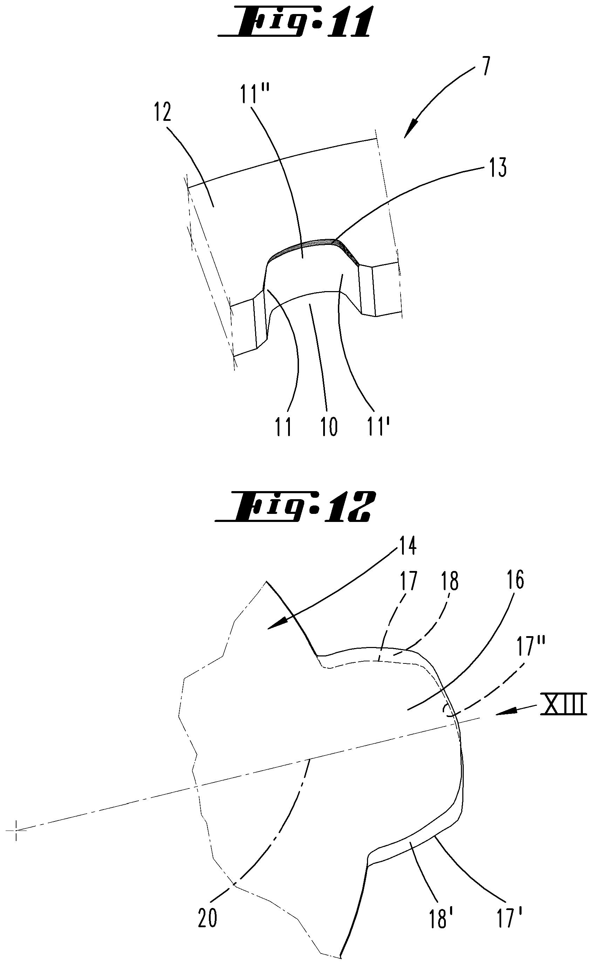

Zur Kompensation der aufgrund der Bewegungsgeometrie nur schwer zu vermeidenden Asymmetrie des Fasenverlaufs erhalten die Schneidzähne 16 des Fasenwerkzeuges 14 eine Profilkorrektur. Die Figur 12 zeigt mit der Bezugsziffer 20 eine durch die Drehachsen 15 des Fasenwerkzeuges 14 verlaufende Mittellinie durch einen Schneidzahn 16. Gegenüber dieser Mittellinie 20 sind die beiden seitlichen Schneidkanten 17, 17' asymmetrisch gestaltet. Die Schneidkante 17 verläuft gegenüber einer gedachten symmetrischen Hüllkurve in einem geringeren Flankenwinkel. Die Schneidkante 17' verläuft hingegen steiler gegenüber einer derartigen Hüllkurve. Gegenüber dieser Hüllkurve ist der zahnkopfseitige Endpunkt der Schneidkante 17 in Richtung auf die Mittellinie lageversetzt. Der Fußpunkt der Schneidkante 17 liegt jedoch in der gedachten symmetrischen Hüllkurve. Bei der Schneidkante 17' liegt der Kopfpunkt in der gedachten Hüllkurve. Der Fußpunkt der Schneidkante 17' ist jedoch gegenüber der symmetrischen Hüllkurve in Richtung auf die Mittellinie 20 geringfügig versetzt.

Zieht man durch jede der beiden Schneidkanten 17, 17' eine Ausgleichsgerade etwa dergestalt, dass sie durch den Übergangspunkt der Schneidkante 17, 17' zum Zahnfuß und durch den Übergangspunkt der Schneidkante 17, 17' und der Stirnschneidkante 17" ergibt, so schneiden diese beiden Geraden die Mittellinie 20 in unterschiedlichen Winkeln und auch in einem unterschiedlichen Abstand zum Mittelpunkt des Fasenwerkzeuges 14.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, nämlich:

Ein Verfahren, bei dem die Fase 13 durch Wälzschälen mit einem Fasenwerkzeug 14 erzeugt wird, das eine zweite Anzahl N₂ von jeweils Schneidkanten17, 17', 17" ausbildenden Schneidzähnen 16 aufweist und dessen Drehachse 15 in einem zweiten Achskreuzwinkel α₂ zur Achse 8 des Werkrades 7 steht, mit einem Vorschub in einer zweiten Vorschubrichtung V₂ parallel zur Erstreckungsrichtung der zu fertigenden Fase 13 im Zahngrund 11".

Ein Werkzeugsatz zur Fertigung eines verzahnten Werkrades 7, dessen Zahngrund 11" unter Ausbildung einer sich bis in die Zahnflanken 11, 11' erstreckenden Fase 13 an eine Stirnfläche 12 des Werkrades 7 angrenzt, mit einem um eine Drehachse 2 drehantreibbaren Verzahnungswerkzeug 1, das eine erste Anzahl N₁ von jeweils Schneidkanten 4 ausbildende erste Schneidzähne 3 aufweist, die so ausgebildet sind, dass damit durch Wälzschälen bei einem Vorschub in einer ersten Vorschubrichtung V₁ die Verzahnung fertigbar ist, und mit einem um eine Drehachse 15 antreibbaren Fasenwerkzeug 14 das eine zweite Anzahl N₂ von jeweils Schneidkanten 17, 17', 17" ausbildenden zweiten Schneidzähnen 16 aufweist, die so ausgebildet sind, dass damit durch Wälzschälen bei einem Vorschub in einer zweiten Vorschubrichtung V₂, die verschieden ist von der ersten Vorschubrichtung V₁, die Fase 13 fertigbar ist.

Eine Vorrichtung, bei der die elektronische Steuerung 27 derart programmiert ist, dass die Vorrichtung nach dem Verfahren gemäß Anspruch 1 arbeitet.

Das Verfahren, der Werkzeugsatz und die Vorrichtung können auch das zusätzliche Merkmal aufweisen, dass die erste Anzahl N₁ von Schneidzähnen 3 größer ist als die zweite Anzahl N₂ von Schneidzähnen 16.

Das Verfahren, der Werkzeugsatz und die Vorrichtung können auch das zusätzliche Merkmal aufweisen, dass der Quotient von erster Anzahl N₁ von Schneidzähnen 3 zu einer Anzahl N₀ von Zähnen 9 des Werkrades 7 ≥ ½ ist.

Das Verfahren, der Werkzeugsatz und die Vorrichtung können auch das zusätzliche Merkmal aufweisen, dass der Quotient der zweiten Anzahl N₂ der Schneidzähne 16 und einer Anzahl N₀ der Zähne 9 des Werkrades 7 ≤ ½, bevorzugt ≤ ⅓ ist.

Das Verfahren, der Werkzeugsatz und die Vorrichtung können auch das zusätzliche Merkmal aufweisen, dass der erste Achskreuzwinkel α₁ größer ist als der zweite Achskreuzwinkel α₂.

Das Verfahren, der Werkzeugsatz und die Vorrichtung können auch das zusätzliche Merkmal aufweisen, dass der erste Achskreuzwinkel α₁ um mindestens 10° größer ist der zweite Achskreuzwinkel α₂.

Das Verfahren, der Werkzeugsatz und die Vorrichtung können auch das zusätzliche Merkmal aufweisen, dass die flankenseitigen Schneidkanten 17, 17' des Fasenwerkzeuges 14 asymmetrisch zu einer durch den Schneidzahn 16 verlaufenden mittleren Radialen 20 verlaufen.

**Liste der Bezugszeichen**

| | | | |
|---|---|---|---|
| 1 | Verzahnungswerkzeug | 25 | Drehantriebsaggregat |
| 2 | Drehachse | 26 | Verstellaggregat |
| 3 | Schneidzahn | 27 | Steuerung |
| 4 | Schneidkante | | |
| 5 | Stirnfläche | α₁ | Achskreuzwinkel |
| 6 | Zahnflanke | α₂ | Achskreuzwinkel |
| 7 | Werkrad | β | Winkel |
| 8 | Drehachse | N₀ | Anzahl |
| 9 | Zahn | N₁ | Anzahl |
| 10 | Zahnlücke | N₂ | Anzahl |
| 11 | Zahnflanke | V₁ | Vorschubrichtung |
| 11' | Zahnflanke | V₂ | Vorschubrichtung |
| 11" | Zahngrund | | |
| 12 | Stirnfläche | | |
| 13 | Fase | | |
| 14 | Fasenwerkzeug | | |
| 15 | Drehachse | | |
| 16 | Schneidzahn | | |
| 17 | Schneidkante | | |
| 17' | Schneidkante | | |
| 17" | Schneidkante | | |
| 18 | Zahnflanke | | |
| 19 | Stirnfläche | | |
| 20 | Mittellinie | | |
| 21 | Werkzeugspindel | | |
| 22 | Drehantriebsaggregat | | |
| 23 | Verstellaggregat | | |
| 24 | Werkstückspindel | | |

## Patentansprüche

1. Verfahren zur Fertigung eines verzahnten Werkrades (7), dessen Zahngrund (11") unter Ausbildung einer sich bis in die Zahnflanken (11, 11') erstreckenden Fase (13) an eine Stirnfläche (12) des Werkrades (7) angrenzt, wobei die Verzahnung des Werkrades (7) durch Wälzschälen mit einem Verzahnungswerkzeug (1) erzeugt wird, das eine erste Anzahl (N₁) von jeweils Schneidkanten (4) ausbildenden Schneidzähnen (3) aufweist, dessen Drehachse (2) in einem ersten Achskreuzwinkel (α₁) zur Drehachse (8) des Werkrades (7) steht, mit einem Vorschub in einer ersten Vorschubrichtung (V₁) parallel zur Erstreckungsrichtung der zu fertigenden Zahnflanken (11, 11') und des Zahngrundes (11"), **dadurch gekennzeichnet, dass** die Fase (13) durch Wälzschälen mit einem Fasenwerkzeug (14) erzeugt wird, das eine zweite Anzahl (N₂) von jeweils Schneidkanten (17, 17', 17") ausbildenden Schneidzähnen (16) aufweist und dessen Drehachse (15) in einem zweiten Achskreuzwinkel (α₂) zur Achse (8) des Werkrades (7) steht, mit einem Vorschub in einer zweiten Vorschubrichtung (V₂) parallel zur Erstreckungsrichtung der zu fertigenden Fase (13) im Zahngrund (11").

2. Werkzeugsatz zur Fertigung eines verzahnten Werkrades (7), dessen Zahngrund (11") unter Ausbildung einer sich bis in die Zahnflanken (11, 11') erstreckenden Fase (13) an eine Stirnfläche (12) des Werkrades (7) angrenzt, mit einem um eine Drehachse (2) drehantreibbaren Verzahnungswerkzeug (1), das eine erste Anzahl (N₁) von jeweils Schneidkanten (4) ausbildende erste Schneidzähne (3) aufweist, die so ausgebildet sind, dass damit durch Wälzschälen bei einem Vorschub in einer ersten Vorschubrichtung (V₁) die Verzahnung fertigbar ist, und mit einem um eine Drehachse (15) antreibbaren Fasenwerkzeug (14) das eine zweite Anzahl (N₂) von jeweils Schneidkanten (17, 17', 17") ausbildenden zweiten Schneidzähnen (16) aufweist, die so ausgebildet sind, dass damit durch Wälzschälen bei einem Vorschub in einer zweiten Vorschubrichtung (V₂), die verschieden ist von der ersten Vorschubrichtung (V₁), die Fase (13) fertigbar ist.

3. Vorrichtung zum Fertigen eines verzahnten Werkrades (7), dessen Zahngrund (11") unter Ausbildung einer sich bis in die Zahnflanken (11, 11') erstreckenden Fase (13) an eine Stirnfläche (12) des Werkrades (7) angrenzt mit einer Werkstückspindel (24) zur Aufnahme des sich bei seiner Bearbeitung um eine Drehachse (8) drehenden Werkrades (7), mit einem Verzahnungswerkzeug (1), das von einer Werkzeugspindel (21) drehantreibbar ist, mit einem Fasenwerkzeug (14), das von derselben oder einer anderen Werkzeugspindel (21) drehantreibbar ist, und mit einer elektronischen Steuerung (27) zur Steuerung von Drehantriebsaggregaten (22, 25) der Werkzeug- und Werkstückspindeln (21, 24) sowie von Verstellaggregaten (23, 26) zur Erzeugung eines Vorschubs (V₁, V₂) und zur Änderung eines Achskreuzwinkels (α₁, α₂) zwischen den Spindelachsen (2, 8), **dadurch gekennzeichnet, dass** die elektronische Steuerung (27) derart programmiert ist, dass die Vorrichtung nach dem Verfahren gemäß Anspruch 1 arbeitet.

4. Verfahren nach Anspruch 1 oder Werkzeugsatz nach Anspruch 2 oder Vorrichtung nach Anspruch 3, **dadurch gekennzeichnet, dass** die erste Anzahl (N₁) von Schneidzähnen (3) größer ist als die zweite Anzahl (N₂) von Schneidzähnen (16).

5. Verfahren, Werkzeugsatz oder Vorrichtung nach einem der vorangehenden Ansprüche, **dadurch gekennzeichnet, dass** der Quotient von erster Anzahl (N₁) von Schneidzähnen (3) zu einer Anzahl (N₀) von Zähnen (9) des Werkrades (7) ≥ ½ ist.

6. Verfahren, Werkzeugsatz oder Vorrichtung nach einem der vorangehenden Ansprüche, **dadurch gekennzeichnet, dass** der Quotient der zweiten Anzahl (N₂) der Schneidzähne (16) und einer Anzahl (N₀) der Zähne (9) des Werkrades (7) ≤ ½, bevorzugt ≤ ⅓ ist.

7. Verfahren oder Vorrichtung nach einem der vorangehenden Ansprüche, **dadurch gekennzeichnet, dass** der erste Achskreuzwinkel (α₁) größer ist als der zweite Achskreuzwinkel (α₂).

8. Verfahren oder Vorrichtung nach einem der vorangehenden Ansprüche, **dadurch gekennzeichnet, dass** der erste Achskreuzwinkel (α₁) um mindestens 10° größer ist der zweite Achskreuzwinkel (α₂).

9. Verfahren, Werkzeugsatz oder Vorrichtung nach einem der vorangehenden Ansprüche, **dadurch gekennzeichnet, dass** die flankenseitigen Schneidkanten (17, 17') des Fasenwerkzeuges (14) asymmetrisch zu einer durch den Schneidzahn (16) verlaufenden mittleren Radialen (20) verlaufen.

## Claims

1. Method for producing a toothed workpiece gear (7), the tooth base (11") of which adjoins an end face (12) of the workpiece gear (7) while forming a chamfer (13) extending into the tooth flanks (11, 11'), the toothing of the workpiece gear (7) being produced by skiving using a gear-tooth-forming tool (1), which has a first number (N₁) of cutting teeth (3) each forming cutting edges (4), the rotational axis (2) of which is at a first axis intersection angle (α₁) to the rotational axis (8) of the workpiece gear (7), with a feed action in a first feed direction (V₁) parallel to the extension direction of the tooth flanks (11, 11') to be produced and the tooth base (11"), **characterised in that** the chamfer (13) is produced by skiving using a chamfering tool (14), which has a second number (N₂) of cutting teeth (16) each forming cutting edges (17, 17', 17") and of which the rotational axis (15) is at a second axis intersection angle (α₂) to the axis (8) of the workpiece gear (7), with a feed action in a second feed direction (V₂) parallel to the extension direction of the chamfer (13) to be produced in the tooth base (11").

2. Tool set for producing a toothed workpiece gear (7), the tooth base (11") of which adjoins an end face (12) of the workpiece gear (7) while forming a chamfer (13) extending into the tooth flanks (11, 11'), comprising a gear-tooth-forming tool (1) that can be driven in rotation about a rotational axis (2) and has a first number (N₁) of first cutting teeth (3) each forming cutting edges (4), which teeth are designed in such a way that, during a feed action in a first feed direction (V₁), the toothing can be produced by skiving, and comprising a chamfering tool (14), which can be driven about a rotational axis (15) and which has a second number (N₂) of second cutting teeth (16) each forming cutting edges (17, 17', 17") which teeth are designed in such a way that, during a feed action in a second feed direction (V₂) which is different from the first feed direction (V₁), the chamfer (13) can be produced by skiving.

3. Device for producing a toothed workpiece gear (7), the tooth base (11") of which adjoins an end face (12) of the workpiece gear (7) while forming a chamfer (13) extending into the tooth flanks (11, 11'), comprising a workpiece spindle (24) for holding the workpiece gear (7) which rotates about a rotational axis (8) during machining thereof, comprising a gear-tooth-forming tool (1) which can be driven in rotation by a tool spindle (21), comprising a chamfering tool (14) which can be driven in rotation by the same or a different tool spindle (21), and comprising an electronic controller (27) for controlling rotary drive units (22, 25) of the tool and workpiece spindles (21, 24) and for controlling adjustment units (23, 26) for generating a feed action (V₁, V₂) and for changing an axis intersection angle (α_{1, α2}) between the spindle axes (2, 8), **characterised in that** the electronic controller (27) is programmed in such a way that the device operates in accordance with the method according to claim 1.

4. Method according to claim 1 or tool set according to claim 2 or device according to claim 3, **characterised in that** the first number (N₁) of cutting teeth (3) is greater than the second number (N₂) of cutting teeth (16).

5. Method, tool set or device according to any of the preceding claims, **characterised in that** the quotient of the first number (N₁) of cutting teeth (3) with respect to a number (N₀) of teeth (9) of the workpiece gear (7) is ≥ ½.

6. Method, tool set or device according to any of the preceding claims, **characterised in that** the quotient of the second number (N₂) of cutting teeth (16) and a number (N₀) of teeth (9) of the workpiece gear (7) is ≤ ½ preferably ≤ ⅓.

7. Method or device according to any of the preceding claims, **characterised in that** the first axis intersection angle (α₁) is greater than the second axis intersection angle (α₂).

8. Method or device according to any of the preceding claims, **characterised in that** the first axis intersection angle (α₁) is at least 10° greater than the second axis intersection angle (α₂).

9. Method, tool set or device according to any of the preceding claims, **characterised in that** the flank-side cutting edges (17, 17') of the chamfering tool (14) extend asymmetrically to a central radial line (20) extending through the cutting tooth (16).

## Revendications

1. Procédé de fabrication d'une roue dentée (7) dont le fond des dents (11") est adjacent à une surface frontale (12) de la roue (7) en formant un chanfrein (13) qui s'étend jusque dans les flancs des dents (11, 11'), dans lequel la denture de la roue (7) est produite par taillage par développante avec un outil de taillage de dents (1) qui présente un premier nombre (N₁) de dents de coupe (3) formant des arêtes de coupe (4) respectives et dont l'axe de rotation (2) forme un premier angle de croisement d'axes (α₁) par rapport à l'axe de rotation (8) de la roue (7), avec une avance dans une première direction d'avance (V₁) parallèle à la direction d'extension des flancs des dents (11, 11') à usiner et du fond des dents (11"), **caractérisé en ce que** le chanfrein (13) est produit par taillage par développante avec un outil de chanfreinage (14) qui comporte un deuxième nombre (N₂) de dents de coupe (16) formant des arêtes de coupe respectives (17, 17', 17") et dont l'axe de rotation (15) forme un deuxième angle de croisement d'axes (α₂) par rapport à l'axe (8) de la roue (7), avec une avance dans une deuxième direction d'avance (V₂) parallèle à la direction d'extension du chanfrein (13) à réaliser dans le fond des dents (11").

2. Jeu d'outils pour la fabrication d'une roue dentée (7) dont le fond des dents (11") est adjacent à une surface frontale (12) de la roue (7) en formant un chanfrein (13) s'étendant jusque dans les flancs des dents (11, 11'), comprenant un outil de taillage (1) pouvant être entraîné en rotation autour d'un axe de rotation (2) et qui présente un premier nombre (N₁) de premières dents de coupe (3) formant des arêtes de coupe respectives (4), qui sont réalisées de telle manière que la denture puisse être usinée par taillage par développante lors d'une avance dans une première direction d'avance (V₁), et comprenant un outil de chanfreinage (14) pouvant être entraîné autour d'un axe de rotation (15) et qui présente un deuxième nombre (N₂) de deuxièmes dents de coupe (16) formant des arêtes de coupe (17, 17, 17) respectives, qui sont conçues de telle manière que le chanfrein (13) puisse être usiné par taillage par développante lors d'une avance dans une deuxième direction d'avance (V₂) qui est différente de la première direction d'avance (V₁).

3. Dispositif pour la fabrication d'une roue dentée (7) dont le fond des dents (11") est adjacent à une surface frontale (12) de la roue (7) en formant un chanfrein (13) qui s'étend jusque dans les flancs des dents (11, 11'), comprenant une broche porte-pièce (24) pour recevoir la roue (7) qui tourne autour d'un axe de rotation (8) lors de son usinage, un outil de taillage (1) qui peut être entraîné en rotation par une broche porte-outil (21), un outil de chanfreinage (14) qui peut être entraîné en rotation par la même broche porte-outil (21) ou par une autre, et une commande électronique (27) pour commander des unités d'entraînement en rotation (22, 25) des broches porte-outil et porte-pièce (21, 24) ainsi que des unités de déplacement (23, 26) pour générer une avance (V₁, V₂) et pour modifier un angle de croisement d'axes (α1, α2) entre les axes des broches (2, 8), **caractérisé en ce que** la commande électronique (27) est programmée de manière que le dispositif fonctionne selon le procédé de la revendication 1.

4. Procédé selon la revendication 1 ou jeu d'outils selon la revendication 2 ou dispositif selon la revendication 3, **caractérisé en ce que** le premier nombre (N₁) de dents de coupe (3) est supérieur au deuxième nombre (N₂) de dents de coupe (16).

5. Procédé, jeu d'outils ou dispositif selon l'une des revendications précédentes, **caractérisé en ce que** le quotient du premier nombre (N₁) de dents de coupe (3) par un nombre (N₀) de dents (9) de la roue (7) est ≥ ½.

6. Procédé, jeu d'outils ou dispositif selon l'une des revendications précédentes, **caractérisé en ce que** le quotient du deuxième nombre (N₂) de dents de coupe (16) et un nombre (N₀) de dents (9) de la roue (7) est ≤ ½, de préférence ≤ ⅓.

7. Procédé ou dispositif selon l'une des revendications précédentes, **caractérisé en ce que** le premier angle de croisement d'axes (α₁) est supérieur au deuxième angle de croisement d'axes (α₂).

8. Procédé ou dispositif selon l'une des revendications précédentes, **caractérisé en ce que** le premier angle de croisement d'axes (α₁) est supérieur d'au moins 10° au deuxième angle de croisement d'axes (α₂) .

9. Procédé, jeu d'outils ou dispositif selon l'une des revendications précédentes, **caractérisé en ce que** les arêtes de coupe (17, 17') côté flanc de l'outil de chanfreinage (14) s'étendent de manière asymétrique par rapport à une radiale centrale (20) passant par la dent de coupe (16).
